# EUROPEAN PATENT APPLICATION

(11) **EP 2 687 089 A1**
(43) Date of publication of application: **22.01.2014**
(21) Application number: 12184261.1
(22) Date of filing: 13.09.2012
(51) Int. Cl.: A01N 25/10, B05D 1/00, B32B 27/18, B82Y 30/00, B82Y 40/00, C08K 3/08, C23C 24/00

(54) **A method for manufacturing of polyethylene regranulate and extruded elements from polyethynele regranulate**

(30) Priority: 20.07.2012 PL 40007012
(71) Applicant: Future Sp. z o.o., 90-752 Lodz (PL)
(72) Inventor: Moscicki, Andrzej, 91-503 Lodz (PL); Mazurek, Przemyslaw, 94-007 Lodz (PL)
(74) Representative: Pawlowski, Adam

(57) **Abstract**

A method for manufacturing of polyethylene regranulate, characterized in that to a raw polyethylene regranulate silver nanoparticles are implanted in such a way that the raw regranulate is subject to alternate steps of coating the regranulate with a colloidal solution comprising: a hydrocarbon with a boiling point below 70°C: from 98% to 99.6% by weight, a surfactant reducing surface tension: from 0.1% to 0.5% by weight; an adhesive agent: from 0.1% to 0.5% by weight; a dispersant: from 0.1% to 0.5% by weight; a viscosity modifier: from 0.1% do 0,5% by weight; silver nanoparticles in a paraffin shell having a size from 3 nm to 8 nm and in concentration of 50,000 ppm, and drying the coated regranulate at a temperature below 70°C, until the silver nanoparticles in the regranulate reaches the concentration of 500 ppm to 1000 ppm by weight.

## Description

The present invention relates to a method for manufacturing of polyethylene regranulate and to extruded elements from polyethylene.

Moulding elements from plastics via extrusion involves melting of the plastic, which is usually provided in a form of a granulate, and then extruding the plastic via a die to obtain an elongated element having a cross-section corresponding to the die, which is then cooled and cut to elements of a desired length, usually in form of plates or pipes. In this way products of various plastics can be formed, in particular of polyethylene (PE). In particular, this method is suitable for forming elements from so-called regranulate, i.e. the plastic in form of small pieces obtained by recycling of waste polyethylene elements from scrap material in the production process.

Dynamic development of nanotechnology resulted in various antimicrobial solutions, in particular colloidal solutions of silver nanoparticles. These solutions can be used to coat the surface of various types of plastic products to provide them antimicrobial properties. This is particularly preferable in case of food containers, toys, hygienic products etc. However, a coated product is subject to damage or to wear of the coating, and therefore its antimicrobial properties deteriorate in time.

It would be more preferable to implant nanoparticles within the whole volume of the product, such that even after it is repeatedly washed or scrapped, the whole surface of the product maintains its antimicrobial properties. A typical solution therefore would be to add nanoparticles in powdered form or as a solution to raw regranulate before melting it. However, this would require precise batching of nanoparticles and appropriate mixing.

It would be advantageous to provide an alternative method for implanting nanoparticles to elements extruded from polyethylene.

The object of the invention is a method for manufacturing of polyethylene regranulate. To a raw polyethylene regranulate silver nanoparticles are implanted in such a way that the raw regranulate is subject to alternate steps of coating the regranulate with a colloidal solution comprising: a hydrocarbon with a boiling point below 70°C: from 98% to 99.6% by weight, a surfactant reducing surface tension: from 0.1% to 0.5% by weight; an adhesive agent: from 0.1% to 0.5% by weight; a dispersant: from 0.1% to 0.5% by weight; a viscosity modifier: from 0.1% do 0,5% by weight; silver nanoparticles in a paraffin shell having a size from 3 nm to 8 nm and in concentration of 50,000 ppm, and drying the coated regranulate at a temperature below 70°C, until the silver nanoparticles in the regranulate reaches the concentration of 500 ppm to 1000 ppm by weight.

Another object of the invention is a method for manufacturing of extruded elements from polyethylene, **characterized in that** a treated regranulate manufactured according to claim 1 is mixed with raw regranulate in a ratio of 1:10, and then the elements are extruded from the regranulate mixture.

The object of the invention are also elements extruded from polyethylene by the method of the invention.

The invention allows to process raw polyethylene regranulate to obtain a regranulate with antimicrobial properties, which can be batched in small amounts to a raw polyethylene regranulate, providing antimicrobial properties to the extruded products.

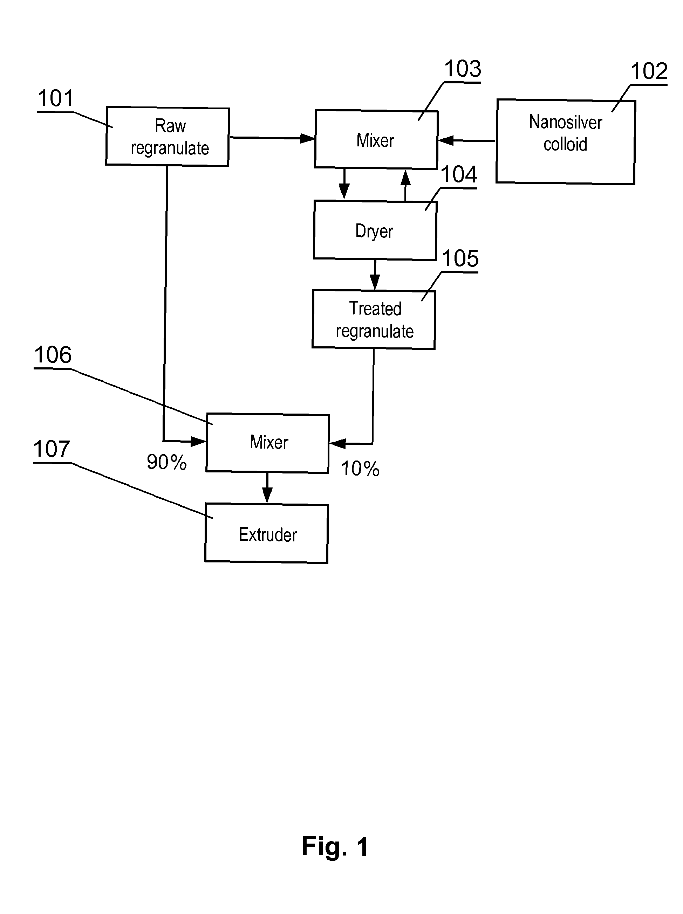

The invention is presented by means of exemplary embodiment on a drawing, in which Fig. 1 presents a diagram of a technological line for carrying out the process according to the invention.

Polyethylene elements extruded according to the invention, are made from a mixture of raw regranulate and treated regranulate. The raw regranulate is a polyethylene regranulate supplied from the tank 101. The raw regranulate is supplied to a mixer 103, where it is mixed with a colloidal nanosilver solution 102 in order to coat the regranulate surface with the solution. The coated regranulate is transported to a dryer 104, where, under a temperature below 70°C, liquid evaporates, leaving silver nanoparticles implanted on the regranulate surface. The process of coating and drying is repeated until a desired concentration of silver nanoparticles is obtained on the regranulate surface, wherein the desired concentration is from 500 ppm to 1000 ppm.

It has been found that a colloidal solution for the implantation of silver nanoparticles on the surface of polyethylene regranulate should particularly contain:
- a hydrocarbon with a boiling point below 70°C: 95% to 98.8% by weight,
- a surfactant reducing surface tension: 0.5% to 2.0% by weight;
- an adhesive agent: 0.5% to 2.0% by weight;
- a dispersant: 0.1% to 0.5% by weight;
- a viscosity modifier: 0.1% to 0.5% by weight
- silver nanoparticles in a paraffin shell of a size 3 nm to 8 nm and concentration of 50,000 ppm.

Liquid with a low boiling point facilitates evaporation of the colloid at the drying stage. For this purpose there can be used for example degreased white spirit.

A surfactant reducing surface tension makes the surface of the regranulate less hydrophobic, and the colloid is less likely to flow off it. For this purpose there can be used for example Tergitol 15-S-5 produced by Dow Chemical.

An adhesive agent increases the adhesiveness of the colloid to the regranulate. For this purpose we can use for example polyvinylpyrrolidone.

A dispersant guarantees the stability of colloid parameters during its storage. For this purpose there can be used for example the EDTA agent.

A viscosity modifier increases the retention of colloid viscosity in a wide range of temperatures. For this purpose there can be used for example the BYK W 966 preparation produced by BYK.

The relatively large amount of the surfactant and adhesive agent provide good adhesion of the colloid to the surface of the regranulate, which may be greasy due to contamination of the regranulate.

The treated regranulate, in which the desired amount of silver nanoparticles was implanted, is stored in a tank 105.

The treated regranulate may constitute the final product of the method according to the invention.

The raw regranulate from the tank 101 and the treated regranulate from the tank 105 are supplied to the mixer 106 at the ratio of 1:10, so as to obtain concentration of nanosilver in the final product at the level from 50 ppm to 100 ppm, depending on the desired level of antimicrobial properties.

The regranulate mixture is then transported to an extruder 107, in which the melted regranulate mixture is passed through an extruding die, to mould the shape of a pipe, and then cooled. In the extruder 107, it is possible to extrude plates or pipes.

### Example

1 ton of polyethylene regranulate was taken from the raw material tank 101 and batched into the mixing tank 103, together with the colloidal solution according to the invention. The regranulate, coated with the solution, was transferred to the dryer chamber 104, with the inner temperature of 50°C for total drying. The dipping and drying cycles were repeated many times, until 10kg of the solution evaporated, which results in the implantation of 500 g of silver nanoparticles in 1 ton of the regranulate, i.e. obtaining the concentration of 500 ppm. Afterwards, treated regranulate and raw regranulate were supplied to the mixer 106 at the ratio of 1:10, obtaining regranulate mixture with 50 ppm concentration by weight, from which pipes were moulded in the extruder.

## Claims

1. A method for manufacturing of polyethylene regranulate, **characterized in that** to a raw polyethylene regranulate silver nanoparticles are implanted in such a way that the raw regranulate is subject to alternate steps of coating the regranulate with a colloidal solution comprising:
- a hydrocarbon with a boiling point below 70°C: from 98% to 99.6% by weight,
- a surfactant reducing surface tension: from 0.1% to 0.5% by weight;
- an adhesive agent: from 0.1% to 0.5% by weight;
- a dispersant: from 0.1% to 0.5% by weight;
- a viscosity modifier: from 0.1% do 0,5% by weight;
- silver nanoparticles in a paraffin shell having a size from 3 nm to 8 nm and in concentration of 50,000 ppm,
and drying the coated regranulate at a temperature below 70°C, until the silver nanoparticles in the regranulate reaches the concentration of 500 ppm to 1000 ppm by weight.

2. A method for manufacturing of extruded elements from polyethylene, **characterized in that** a treated regranulate manufactured according to claim 1 is mixed with raw regranulate in a ratio of 1:10, and then the elements are extruded from the regranulate mixture.
